# EUROPEAN PATENT APPLICATION

(11) **EP 4 783 732 A1**
(43) Date of publication of application: **29.07.2026**
(21) Application number: 25153512.6
(22) Date of filing: 23.01.2025
(51) Int. Cl.: H04W 84/06, H04W 4/02, H04W 4/90

(54) **DEVICE AND METHOD FOR DISTRIBUTING A WARNING MESSAGE TO MOBILE TERMINALS SERVED BY A MOBILE COMMUNICATION NETWORK**

(71) Applicant: NTT DOCOMO, INC., Tokyo 100-6150 (JP)
(72) Inventor: BHATTACHARJEE, Sushmit, 80687 Munich (DE); TANAKA, Itsuma, 80687 Munich (DE); SAMA, Malla Reddy, 80687 Munich (DE); MINOKUCHI, Atsushi, Tokyo 100-6150 (JP)
(74) Representative: Viering, Jentschura & Partner mbB Patent- und Rechtsanwälte

(57) **Abstract**

According to one embodiment, a method is described comprising receiving a request message indicating that a warning message is to be distributed, wherein the request message includes information about a geographical area to which the warning message should be distributed and a period of time, determining a set of radio access network nodes of the mobile communication network which should distribute the warning message and in reaction to a determination that one or more radio access network nodes onboard one or more low earth orbit satellites at least partially take over coverage of the geographical area during the period of time, requesting the one or more radio access network nodes to distribute the warning message.

## Description

The present disclosure relates to devices and methods for distributing a warning Message to mobile terminals served by a mobile communication network.

Public Warning Systems (PWS) and Earthquake and Tsunami Warning Systems (ETWS) are critical components of modern emergency communication infrastructures. These systems are designed to disseminate urgent alerts to the public in the event of natural disasters, such as earthquakes and tsunamis, as well as other emergencies. The primary goal of PWS and ETWS is to provide timely and accurate information to help mitigate the impact of such events on human lives and property.

PWS and ETWS typically utilize mobile radio cell broadcast technology to deliver messages to a large number of mobile devices within a specific geographic area. This method ensures that alerts are received quickly and efficiently, even when traditional communication networks are congested or compromised.

Non-Terrestrial Networks (NTNs) which include satellite and high-altitude platform systems, offer the potential to extend the reach of PWS and ETWS to remote and underserved areas. However, utilizing an NTN for PWS or ETWS leads to specific challenges. In particular, the mobility of low earth orbit (LEO) satellites may lead to mobile terminals not being reached by a warning message due to the fact that the coverage area of a radio access network node aboard the satellite has moved away from the impacted area, i.e. the area where the warning message should be distributed.

Accordingly, approaches which allow a reliable implementation of a PWS or ETWS in a mobile communication system comprising an NTN architecture are desirable.

According to one embodiment, a method for distributing a warning message to mobile terminals served by a mobile communication network, is provided comprising:
- receiving, by a network component of the mobile communication network, a request message indicating that a warning message is to be distributed to a set of mobile terminals, wherein the request message includes information about a geographical area to which the warning message should be distributed and a period of time during which the warning message should be distributed
- determining, by the network component, a set of radio access network nodes of the mobile communication network which should distribute the warning message to reach the mobile terminals of the set of mobile terminals from the information about the geographical area
- determining whether one or more radio access network nodes onboard one or more low earth orbit satellites at least partially take over coverage of the geographical area during the period of time
- requesting the radio access network nodes of the set of radio access network nodes to distribute the warning message; and
- in reaction to a determination that one or more radio access network nodes onboard one or more low earth orbit satellites at least partially take over coverage of the geographical area during the period of time, requesting the one or more radio access network nodes to distribute the warning message.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: illustrates a scenario where the functionality of one or more base stations is provided by one or more satellites.
- Figure 3: illustrates the coverage of LEO satellites at two different times.
- Figure 4: illustrates a warning delivery procedure.
- Figure 5: shows a flow diagram illustrating a method for distributing a warning message to mobile terminals served by a mobile communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for distributing a warning message to mobile terminals served by a mobile communication network, comprising:
   - receiving, by a network component of the mobile communication network, a request message indicating that a warning message is to be distributed to a set of mobile terminals, wherein the request message includes information about a geographical area to which the warning message should be distributed and a period of time during which the warning message should be distributed;
   - determining, by the network component, a set of radio access network nodes of the mobile communication network which should distribute the warning message to reach the mobile terminals of the set of mobile terminals from the information about the geographical area;
   - determining whether one or more radio access network nodes onboard one or more low earth orbit satellites at least partially take over coverage of the geographical area during the period of time;
   - requesting the radio access network nodes of the set of radio access network nodes to distribute the warning message; and
   - in reaction to a determination that one or more radio access network nodes onboard one or more low earth orbit satellites at least partially take over coverage of the geographical area during the period of time, requesting the one or more radio access network nodes to distribute the warning message.
Example 2 is the method of example 1, comprising determining whether one or more radio access network nodes onboard one or more low earth orbit satellites at least partially take over coverage of the geographical area during the period of time by using satellite ephemeris information.
Example 3 is the method of example 1 or 2, comprising requesting the one or more radio access network nodes to distribute the warning message when they have started taking over coverage of the geographical area.
Example 4 is the method of any one of examples 1 to 3, comprising storing the warning request message and/or the warning message and forwarding the warning request message and/or the warning message to the one or more radio access network nodes when the one or more radio access network nodes have started taking over coverage of the geographical area.
Example 5 is the method of any one of examples 1 to 4, comprising storing the warning request message and/or the warning message and forwarding the warning request message and/or the warning message to the one or more radio access network nodes when the one or more radio access network nodes have become available to the network component (e.g. have become known to the network component, registered at the network component and/or connected to the network component).
Example 6 is the method of any one of examples 1 to 5, wherein the information about a geographical area to which the warning message should be distributed is information allowing the network component to determine a set of radio access network nodes of the mobile communication network which should distribute the warning message to reach the mobile terminals of the set of mobile terminals.
Example 7 is the method of any one of examples 1 to 6, wherein the information allowing the network component to determine the set of radio access network nodes is a list of tracking areas to which the warning message should be distributed.
Example 8 is the method of any one of examples 1 to 7, comprising receiving the request message from a Cell Broadcast Centre Function or from a Public Warning System - Interworking Function.
Example 9 is the method of any one of examples 1 to 8, wherein the network component is a mobility management component.
Example 10 is the method of any one of examples 1 to 9, wherein the network component is a network function of a core network of the mobile communication network.
Example 11 is the method of any one of examples 1 to 10, wherein the network component is an Access and Mobility Management Function or a Mobility Management Entity.
Example 12 is the method of any one of examples 1 to 11, comprising determining whether the set of radio access network nodes includes a first radio access network node onboard a first low earth orbit satellite and determining whether one or more second radio access network nodes onboard one or more second low earth orbit satellites at least partially take over coverage of the geographical area during the period of time in reaction to a determination that the set of radio access network nodes includes a first radio access network node onboard a first low earth orbit satellite and requesting the one or more second radio access network nodes to distribute the warning message in reaction to a determination that one or more second radio access network nodes onboard one or more second low earth orbit satellites at least partially take over coverage of the geographical area during the period of time.
Example 13 is a network component of a mobile communication network, configured to perform the method of any one of examples 1 to 12.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

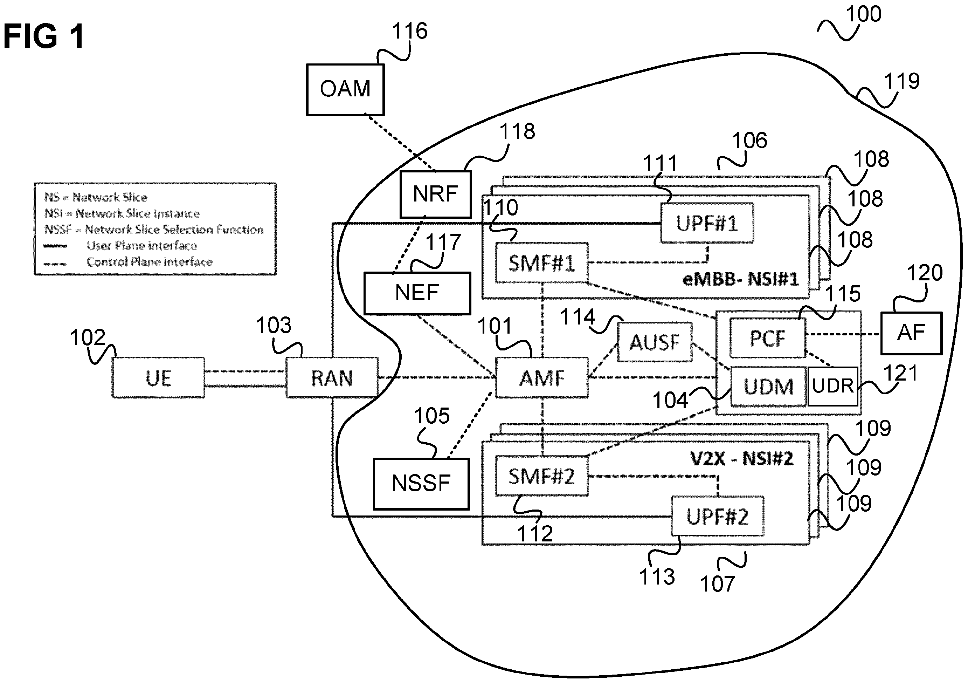

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or 6G or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

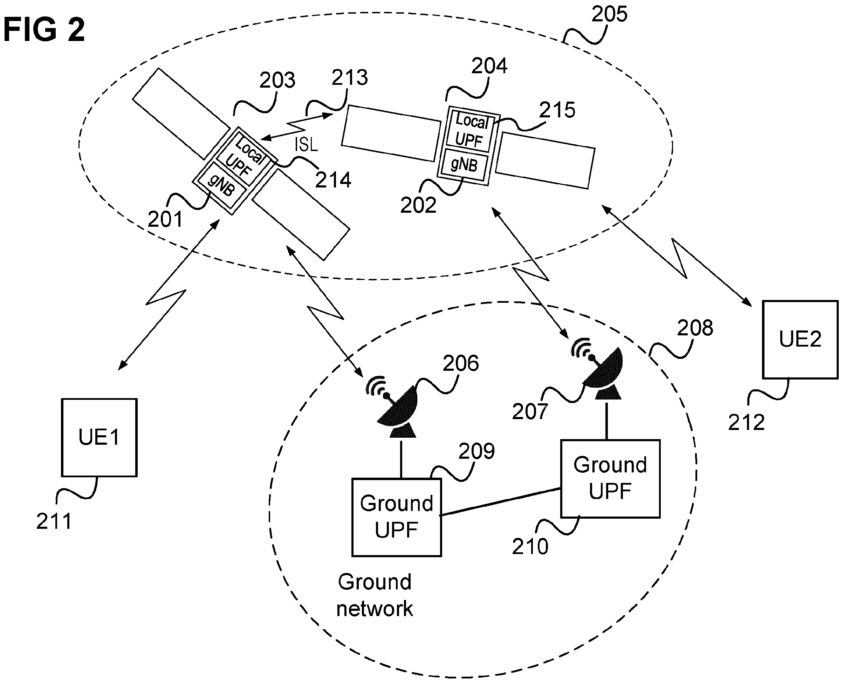

Some base stations (i.e. radio access network nodes) may be implemented by satellites. This means that communication between UEs under the coverage of one or more serving satellites can be supported, using regenerative (or regenerative payload)-based satellite access (onboard gNBs). Such a scenario is illustrated in figure 2.

Figure 2 illustrates a scenario where the functionality of one or more base stations 201, 202 is provided by one or more satellites 203, 204.

In the example of figure 1, a first satellite 203 provides a first base station (gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 203, 204 (which may also be the same ground UPF for each satellite 203, 204).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 203 is the serving satellite for the first UE 211 and the second satellite 204 is the serving satellite for the second UE 212.

An example of an application function (AF) 120 is a Cell Broadcast Centre Function (CBCF). This is a component in the 5G network architecture responsible for managing and delivering cell broadcast messages. These messages are typically used for public warning systems (PWS), emergency alerts, and other broadcast services. The CBCF interfaces with the Access and Mobility Management Function (AMF) 101 in the 5G core network 119 to ensure that broadcast messages are efficiently delivered to the appropriate cells and user equipment (UE) within a specified area.

The content of a warning message may be delivered by a Cell Broadcast Entity (CBE) which is a component responsible for creating and managing the content of warning messages. The CBE interfaces with the Cell Broadcast Centre (CBC) to ensure that these messages are formatted correctly and delivered to the appropriate network elements for broadcast to users.

Since there may not be complete 5G coverage, a Public Warning System - Interworking Function (PWS-IWF) may act as an intermediary between the legacy LTE-based Cell Broadcast Centre (CBC) and the new 5G core network components. It ensures compatibility and smooth operation of public warning systems as networks transition from LTE to 5G. The PWS-IWF facilitates the communication between the CBC and the AMF 101, enabling the delivery of emergency alerts and public warnings over the 5G network.

In a 5G network, the CBCF and PWS-IWF work together to ensure the seamless delivery of public warning messages. The CBCF is responsible for generating and managing the broadcast messages, while the PWS-IWF ensures these messages are compatible with the 5G network infrastructure.

An example for a PWS is an Earthquake and Tsunami Warning System (ETWS).

It is desirable that a PWS works also in an NTN (non-terrestrial network) scenario where (at least some) mobile terminals are served by base stations onboard of satellites, as illustrated in figure 2, in particular by base stations on board of low earth orbit (LEO) satellites. LEO satellites may be understood as satellites in an orbit around Earth with a period of 128 minutes or less (making at least 11.25 orbits per day) and an eccentricity less than 0.25 or between 80 and 2000 kilometres above the Earth's surface.

NTN scenarios cause challenges for PWS. Specifically, in case of LEO satellites, because of the low altitude deployment (160-2000 km), coverage area is very small (compared to a GEO (geostationary equatorial orbit) satellite). Moreover, LEO satellites are constantly orbiting around the globe. Hence, using a traditional ETWS/PWS procedure may lead to incomplete coverage of impacted area because of a satellite moving away from the impacted area (and thus losing at least partially coverage of the impacted area). This is not desirable because the purpose of ETWS/PWS is to reach as many users in impacted area as possible. If users are not reached the safety of this users is endangered.

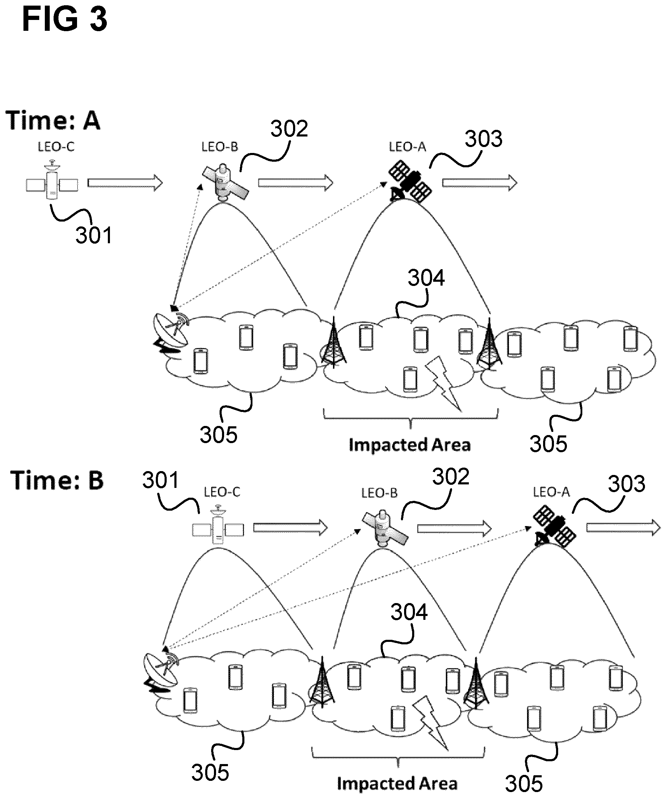

Figure 3 illustrates the coverage of LEO satellites 301, 302, 303 at two times (time A and time B). It should be noted that if herein coverage of a satellite is mentioned, then this is meant to refer of the coverage of RAN node (i.e. base station) onboard the satellite.

In this example, the satellites move from left to right such that at time A, the impacted area 304 (i.e. the area presumably affected by a disaster (earthquake, tsunami, etc.)), which is e.g. one of multiple tracking areas 304, 305 (but may also cover multiple tracking areas, possibly a large number of tracking areas.) is covered by the first satellite 301 (LEO-A) and a time B, the impacted area 304 is affected by the second satellite 302 (LEO-B).

Typically, warning messages should be delivered in a certain warning time window. For example, if it is assumed that there is a danger for a certain period of time (e.g. 30 minutes) than mobile terminals should be alerted during the period of time. While most of the mobile terminals may be reached by an initial broadcast of the warning message, it is important that during the whole period of time it is tried to reach mobile terminals in the impacted area since mobile terminals may enter the impacted area or are switched on after the initial broadcast of the warning message.

So, in case time B is still in the period of time (e.g. time B is 15 minutes after time A) then the first satellite 301 may for example perform the initial broadcast (or multiple broadcasts) of the warning message, but after 15 minutes, the RAN node onboard the second satellite 302 takes over the distribution of the warning message.

It should be noted that this is a simple example and, according to various embodiments, it may be more complicated which satellite performs the broadcast. For example, if after e.g. 7 minutes the impacted area is covered have by the first satellite 301 and the second satellite 302, both satellites may broadcast the warning message to ensure coverage of the impacted region 304. It may also be the case that this situation already occurs at the start (i.e. beginning of the warning time window (e.g. the first satellite 301 only covers a part of the impacted area 304), so already at the start the first satellite 301 and the second satellite 302 may both broadcast the warning message and, e.g. at a later time, even the third satellite 303 may start broadcasting the warning message if the impacted area 304 is no longer covered by the first satellite and the second satellite.

To cover all these scenarios and maximize the number of mobile terminals (and users) in the impacted area 304 which can be reached, according to various embodiments, ephemeris information of satellites is used to determine the satellite or satellites that should send (typically broadcast) a warning message.

In other words, according to various embodiments, satellite ephemeris information is used to increase the possibility of reaching as many users in the impacted area 304 as possible and for sustained duration as per the requirements of the warning message from authorities. This is achieved by using satellite ephemeris information to ensure prolonged distribution of warning message (as per requirement of warning message) and to increase the number of users to which the message could be distributed in impacted area.

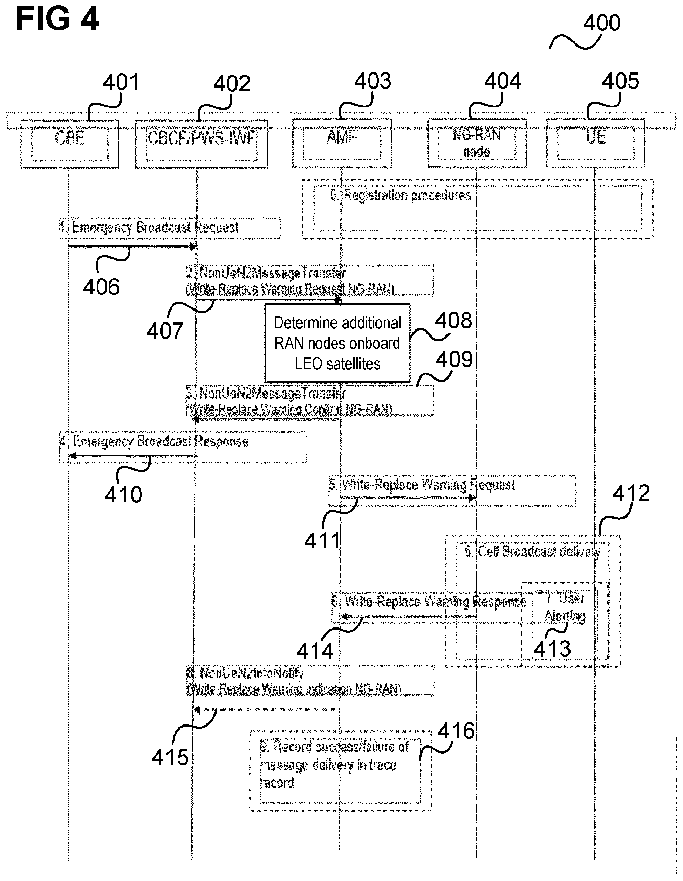

Figure 4 illustrates a warning delivery procedure.

A CBE 401, a CBCF or PWS-IWF 402, an AMF 403, a RAN node (i.e. a base station, e.g. an eNB or a NG(next generation)-RAN node) 404 and a mobile terminal 405 are involved in the procedure. It should be noted that the approaches and procedures described herein may apply to both E-UTRAN (evolved UTMS Terrestrial Radio Access Network, i.e. LTE radio access network) and NG-RAN (i.e. 5G radio access network. Specifically, in the LTE (long-term evolution) case, the AMF 403 may instead by an MME 403.

In 406, the CBE 401 sends an emergency broadcast request to the CBCF/PWS-IWF 402.

In 407, the CBCF/PWS-IWF 402 sends a request (e.g. a Write-Replace Warning Request message NG-RAN) to send a warning message according to the emergency broadcast request to the AMF 403 (e.g. to each of multiple AMFs).

The Write-Replace Warning Request NG-RAN message includes information to which geographical areas the warning message should be delivered. This is typically a list of NG-RAN TAIs (next generation radio access network tracking area identifications). Based on this list, the AMF 403, in 408, selects the appropriate RAN nodes for distribution of the warning message.

Upon receiving the "Write-Replace Warning Request NG-RAN" message from the CBCF/PWS-IWF which contains the "list of NG-RAN TAIs", the AMF (or MME) 403 selects the appropriate NG-RAN nodes for distribution of the warning message.

At this point (e.g. time A of figure 2) it selects only the base station onboard the satellite covering the impacted area 304 (e.g. the first satellite 301) from among the RAN nodes aboard the satellites 301, 302, 303. However, the AMF 403 uses satellite ephemeris information which contains satellite IDs, satellite constellation IDs, and the orbital times of the satellites. The AMF 403 maps this information and a time period or warning period attribute (specifying the warning time window) of the warning message received from the CBCF/PWS-IWF 402 to determine the probable (or potential) satellites (e.g. the second satellite 302), in terms of satellite IDs (and e.g. corresponding Global RAN Node IDs) that would pass over the impacted area 304 during the warning time window.

The AMF 403 includes the base stations onboard these potential satellites also in the list of distribution of the warning messages, i.e. adds additional RAN nodes based on ephemeris information to the list of RAN nodes. In other words, the AMF 403 considers satellite mobility when determining the list of RAN nodes (i.e. base stations) which should distribute the warning message: it uses the satellite ephemeris information to extract the potential satellites that could pass by the impacted area in the duration of the warning period and includes the RAN nodes aboard those satellites in the list of RAN nodes which should distribute the warning message (considering information about the warning time window by taking into account which satellites (e.g. which onboard RAN nodes) are involved in the coverage of the impacted region 304), i.e. it extends the list of NG-RAN nodes for distribution by including additional RAN nodes of potential satellites, e.g. by the potential satellites' Global RAN Node IDs.

In 409, the AMF 403 confirms to the CBCF/PWS-IWF 402 and in 410, the CBCF/PWS-IWF 402 response to the CBE 401 accordingly.

In 411, the AMF 403 sends a request (e.g. a Write-Replace Warning Request) to each RAN node it has determined for distribution of the warning message (i.e. each RAN node of the list of RAN nodes for distribution) to distribute the warning message in the coverage area the RAN node serves, including the RAN node 404 in the present example.

It should be noted that initially (e.g. at time A), AMF 403 does this for all RAN nodes on the list of RAN nodes without the additional RAN nodes (it has added based on the ephemeris information). For each added RAN node, the AMF 403 does this when the RAN node gets involved in the coverage of the impacted area 304 (e.g. at time B for the second satellite 302 or earlier when the RAN node of the second satellite 302 starts (partially) serving the impacted area 304).

In other words, during the warning period, when the potential satellites arrive over the impacted area 304, the AMF 403 distributes the warning message to the corresponding RAN nodes (onboard those satellites).

It should be noted that according to Existing Warning Delivery Procedure only the RAN nodes (e.g. NG-RAN nodes) that are currently available to (registered at) the AMF 403 are selected based on the list of NG-RAN TAIs received from the CBCF/PWS-IWF 402. The RAN node of a potential satellite may not even yet be available (registered or e.g. connected or known) to the AMF 403. Therefore, the AMF 403 may need to wait until it can send the warning request message (i.e. the request to distribute the warning message) to the RAN node of a potential satellite (as it has been described in the example above, although for an additional RAN node that is already available to the AMF 403, it would also be possible that the AMF 403 already sends the warning request message but indicates that it should wait with the distribution until it starts to cover the impacted area 304). For such a later sending of the warning request message to a RAN node, the AMF 403 may support a functionality of storing and forwarding a warning request message. It may then store the warning request message and when the RAN node (onboard a potential satellite) starts to cover the impacted area 304, the AMF 403 may then forward the warning request message to the RAN node.

According to the warning request message, in 412, the RAN node 404 broadcasts the warning message to all mobile terminals in its coverage area, including the mobile terminal 405 in the present example. The mobile terminal 405 then alerts its user according to the warning message (i.e. display the warning message and/or outputs an audio alarm) in 413.

In 414, the RAN node responds (acknowledges) to the AMF 403 and the AMF 403 in 415 informs the CBCF/PWS-IWF 402 about the warning message distribution and may record success and failure of warning message delivery in a trace required in 416.

The Write-Replace Warning Request (or Indication) message and the Write-Replace Warning Request NG-RAN Request (or Indication) message may include Warning Area Coordinates which may be used to restrict the area in which mobile terminals output (e.g. visually display, typically along with an audio alarm signal) warning (e.g. PWS such as ETWS) messages, in particular to the impacted area 304.

Namely, the Warning Area Coordinates information element indicates alert area coordinates of a warning message. The RAN node 404 (eNB or NG-RAN node) passes this information to the mobile terminal 404. The mobile terminal 405 uses this information to conditionally display the warning message contents. Specifically, if a mobile terminal receives a warning message which includes Warning Area Coordinates and the mobile terminal determines that it is not located at those coordinates, it does not alert its user (visually and/or via audio).

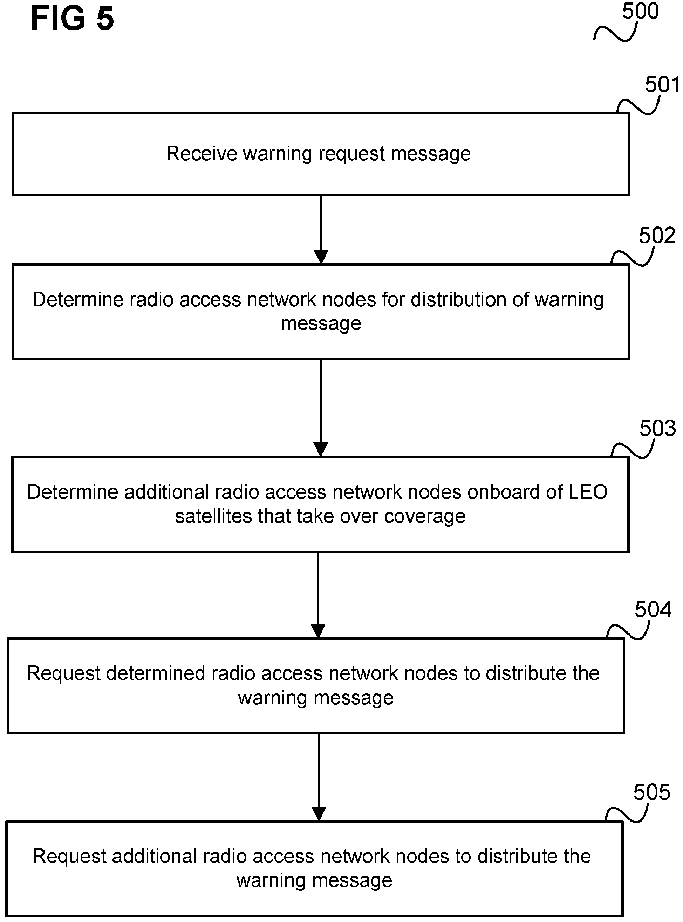

In summary, according to various embodiments, a method is provided as illustrated in figure 5.

Figure 5 shows a flow diagram 500 illustrating a method for distributing a warning message to mobile terminals served by a mobile communication network according to an embodiment.

In 501, a request message indicating that a warning message is to be distributed to a set of mobile terminals is received by a network component of the mobile communication network (e.g. AMF in 5G or MME in LTE). The request message includes information about a geographical area to which the warning message should be distributed (i.e. the impacted area) and a period of time (also referred to as warning time window) during which the warning message should be distributed (i.e. the warning message should be distributed to the mobile terminals served by the mobile communication network which are located in the geographical regions (which may include multiple sub-regions and can but does not have to be a connected region)).

In 502, the network component determines a set of radio access network nodes of the mobile communication network which should distribute the warning message to reach the mobile terminals of the set of mobile terminals (located in the geographical area) from the information about the geographical area (e.g. the radio access network nodes that are required to distribute the warning message to cover the impacted area according to a current point in time, i.e. that cover the impacted area at the point of time of the determination).

In 503, it is determined (e.g. by the network component) whether one or more radio access network nodes onboard one or more low earth orbit satellites at least partially take over coverage of the geographical area during the period of time.

In 504, the radio access network nodes of the set of radio access network nodes are requested to distribute the warning message.

In 505, in reaction to a determination that one or more radio access network nodes onboard one or more low earth orbit satellites at least partially take over coverage of the geographical area during the period of time, the one or more radio access network nodes are requested to distribute the warning message (e.g. by the network component).

It should be noted that that the order of 501-505 shown in figure 5 is not necessary and for example, the radio access network nodes of the set of radio access network nodes may be requested to distribute the warning message before it is determined whether RAN nodes aboard LEO satellites start covering the geographical area.

According to various embodiments, in other words, a network component (e.g. AMF or MME) has the capability to map satellite ephemeris information and information from a warning message request to pre-empt possible satellites that are currently not covering the impacted area but will orbit over it in future (within the warning duration, warning time window) and the capability to distribute warning messages also to potential RAN nodes onboard this kind of satellites

This can be seen as an extension of the capability of an ETWS/PWS procedure to a regenerative payload-based NTN architecture.

The method is for example performed by one or more circuits (e.g. of a network component, which may also be realized by multiple devices). A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". According to an embodiment, a communication system is provided which comprises the mobile terminal and which is particular configured (i.e. comprises one or more components configured) to provision the secure element with the sensing profile.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for distributing a warning message to mobile terminals served by a mobile communication network, comprising:
receiving, by a network component of the mobile communication network, a request message indicating that a warning message is to be distributed to a set of mobile terminals, wherein the request message includes information about a geographical area to which the warning message should be distributed and a period of time during which the warning message should be distributed;
determining, by the network component, a set of radio access network nodes of the mobile communication network which should distribute the warning message to reach the mobile terminals of the set of mobile terminals from the information about the geographical area;
determining whether one or more radio access network nodes onboard one or more low earth orbit satellites at least partially take over coverage of the geographical area during the period of time;
requesting the radio access network nodes of the set of radio access network nodes to distribute the warning message; and
in reaction to a determination that one or more radio access network nodes onboard one or more low earth orbit satellites at least partially take over coverage of the geographical area during the period of time, requesting the one or more radio access network nodes to distribute the warning message.

2. The method of claim 1, comprising determining whether one or more radio access network nodes onboard one or more low earth orbit satellites at least partially take over coverage of the geographical area during the period of time by using satellite ephemeris information.

3. The method of claim 1 or 2, comprising requesting the one or more radio access network nodes to distribute the warning message when they have started taking over coverage of the geographical area.

4. The method of any one of claims 1 to 3, comprising storing the warning request message and/or the warning message and forwarding the warning request message and/or the warning message to the one or more radio access network nodes when the one or more radio access network nodes have started taking over coverage of the geographical area.

5. The method of any one of claims 1 to 4, comprising storing the warning request message and/or the warning message and forwarding the warning request message and/or the warning message to the one or more radio access network nodes when the one or more radio access network nodes have become available to the network component.

6. The method of any one of claims 1 to 5, wherein the information about a geographical area to which the warning message should be distributed is information allowing the network component to determine a set of radio access network nodes of the mobile communication network which should distribute the warning message to reach the mobile terminals of the set of mobile terminals.

7. The method of any one of claims 1 to 6, wherein the information allowing the network component to determine the set of radio access network nodes is a list of tracking areas to which the warning message should be distributed.

8. The method of any one of claims 1 to 7, comprising receiving the request message from a Cell Broadcast Centre Function or from a Public Warning System - Interworking Function.

9. The method of any one of claims 1 to 8, wherein the network component is a mobility management component.

10. The method of any one of claims 1 to 9, wherein the network component is a network function of a core network of the mobile communication network.

11. The method of any one of claims 1 to 10, wherein the network component is an Access and Mobility Management Function or a Mobility Management Entity.

12. The method of any one of claims 1 to 11, comprising determining whether the set of radio access network nodes includes a first radio access network node onboard a first low earth orbit satellite and determining whether one or more second radio access network nodes onboard one or more second low earth orbit satellites at least partially take over coverage of the geographical area during the period of time in reaction to a determination that the set of radio access network nodes includes a first radio access network node onboard a first low earth orbit satellite and requesting the one or more second radio access network nodes to distribute the warning message in reaction to a determination that one or more second radio access network nodes onboard one or more second low earth orbit satellites at least partially take over coverage of the geographical area during the period of time.

13. A network component of a mobile communication network, configured to perform the method of any one of claims 1 to 12.
